(19) Europäisches Patentamt
European Patent Office
Office européen des brevets

(11) **EP 3 130 941 B1**

(12) **EUROPÄISCHE PATENTSCHRIFT**

(45) Veröffentlichungstag und Bekanntmachung des Hinweises auf die Patenterteilung:
**18.10.2017 Patentblatt 2017/42**

(51) Int Cl.:
*G01S 1/04* (2006.01)  *G02B 27/10* (2006.01)
*G06K 7/10* (2006.01)  *G01J 1/42* (2006.01)
*G01S 17/02* (2006.01)  *G01S 7/481* (2006.01)
*G01J 1/04* (2006.01)

(21) Anmeldenummer: **15181080.1**

(22) Anmeldetag: **14.08.2015**

(54) **LICHTTASTER**

LIGHT SENSOR

DETECTEUR OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.02.2017 Patentblatt 2017/07**

(73) Patentinhaber: **SICK AG**
**79183 Waldkirch/Breisgau (DE)**

(72) Erfinder:
• **Kriener, Eva-Maria**
**79104 Freiburg (DE)**

• **Albrecht, Roland**
**79215 Elzach (DE)**

(74) Vertreter: **Manitz Finsterwald Patentanwälte PartmbB**
**Martin-Greif-Strasse 1**
**80336 München (DE)**

(56) Entgegenhaltungen:
**EP-A1- 1 816 488      EP-A1- 2 629 050**
**EP-A1- 2 848 960      DE-A1- 4 229 313**
**DE-A1- 19 710 724**

**Beschreibung**

Die Erfindung betrifft einen Lichttaster mit einem Lichtsender zum Aussenden von Sendelicht in eine Detektionszone, einem ersten und einem zweiten Lichtempfänger, welche zum Empfangen von Empfangslicht aus der Detektionszone, das von einem zu detektierenden Objekt spiegelnd oder diffus reflektiert wird, und zum Erzeugen von Empfangssignalen aus dem Empfangslicht ausgelegt sind, und einer Auswerteeinheit zum Erzeugen eines Erfassungssignals aus den Empfangssignalen.

Lichttaster werden beispielsweise in der Automatisierungstechnik eingesetzt, um an einem Objekt angebrachte Kontrastmarken oder Codierungen zu erkennen bzw. auszulesen. Schwankungen der Tastweite, d.h. des Abstand zwischen dem Lichttaster und den zu detektierenden Objekten, können die Detektionszuverlässigkeit negativ beeinflussen, da die Intensität des von dem oder den Lichtempfängern erfassten Empfangslichts mit zunehmender Tastweite abnimmt und auch der durch den Lichtsender auf dem Objekt erzeugte Lichtfleck unscharf auf die Lichtempfänger abgebildet werden kann, wenn sich das Objekt außerhalb des Schärfentiefebereichs einer Empfangsoptik des Lichttasters befindet.

In DE 32 03 720 C2 ist ein Lichttaster beschrieben, welcher zur Erkennung von auf Gegenständen angebrachten optischen Codemarken ausgelegt ist. Zwischen dem Lichttaster und den Gegenständen erfolgt eine Relativbewegung, aufgrund der die Codemarken nacheinander auf den Lichtempfänger abgebildet werden, wobei in Leserichtung zwei Lichtempfänger hintereinander in einem solchen Abstand angeordnet sind, dass die Codemarken zuerst auf dem einen und dann auf dem anderen Lichtempfänger abgebildet werden. Mittels Differenzbildung der Empfangssignale der beiden Lichtempfänger können Schwankungen der Tastweite erkannt und berücksichtigt werden. Bei der bekannten Methode ist also eine Relativbewegung zwischen Lichttaster und Gegenstand erforderlich.

EP 2 848 960 A1 betrifft einen Triangulationslichttaster mit einem zeilenförmigen Lichtsensor mit mehreren Empfangselementen, welche einem Nahbereichsteil und einem Fernbereichsteil zugeordnet werden können.

EP 2 629 050 A1 zeigt einen Triangulationslichttaster mit einem zeilenförmigen Lichtsensor mit mehreren Empfängerelementen, welche eine unterschiedliche Ausdehnung in Triangulationsrichtung aufweisen.

Weitere Lichttaster sind in DE 197 30 341 A1, DE 199 45 442 A1 und DE 198 46 002 A1 beschrieben.

Es ist die Aufgabe der Erfindung, einen Lichttaster anzugeben, der eine zuverlässige Detektion bei sich ändernder Tastweite oder bei unterschiedlichen Tastweiten auf einfache Weise und mit geringem Aufwand ermöglicht, also insbesondere den nutzbaren Tastweitenbereich erweitert.

Die Lösung der Aufgabe erfolgt durch einen Lichttaster mit den Merkmalen des Anspruchs 1. Erfindungsgemäß ist vorgesehen, dass die Lichtempfänger derart angeordnet sind, dass jeder Lichtempfänger einen Teil des Empfangslichts empfängt, und dass jeder Lichtempfänger eine wirksame Empfangsfläche aufweist, wobei die wirksame Empfangsfläche des zweiten Lichtempfängers kleiner ist als die wirksame Empfangsfläche des ersten Lichtempfängers, so dass das Verhältnis zwischen dem von dem ersten Lichtempfänger erzeugten Empfangssignal und dem von dem zweiten Lichtempfänger erzeugten Empfangssignal von der Tastweite des detektierten Objekts abhängt. Bei dem erfindungsgemäßen Lichttaster wird ausgenutzt, dass ein Lichtfleck, der durch das reflektierte Empfangslicht auf den Lichtempfängern erzeugt wird, einen minimalen Durchmesser bzw. Querschnitt aufweist, wenn sich das detektierte Objekt innerhalb der Nenntastweite befindet. Mit der Nenntastweite wird diejenige Tastweite bezeichnet, für die der Lichttaster ausgelegt ist. Befindet sich das Objekt außerhalb der Nenntastweite, vergrößert sich der Lichtfleck, was dazu führt, dass sich die Bestrahlungsstärke auf dem Lichtempfänger, d.h. die Leistung des Empfangslichts pro Flächeneinheit, verringert. Die Größe der zweiten Empfangsfläche ist dabei so gewählt, dass eine Aufweitung des in Richtung des zweiten Lichtempfängers reflektierten Empfangslichts, die durch die Abweichung von der Nenntastweite des Lichttasters bedingt ist, dazu führt, dass nur noch ein Teilquerschnitt des Empfangslichts detektiert wird, was zu einer Abnahme der entsprechenden Empfangssignalstärke führt. Die unterschiedlich großen wirksamen Empfangsflächen der Lichtempfänger führen dazu, dass sich diese Abnahme der Signalintensität bei dem ersten Lichtempfänger vergleichsweise weniger stark auf die Signalhöhe auswirkt als bei dem zweiten Lichtempfänger. Die wirksame Empfangsfläche des ersten Lichtempfängers wird dabei vorteilhafterweise so bemessen, dass zumindest innerhalb des vorgesehenen Tastweitenbereichs, für den der Lichttaster ausgelegt ist, zumindest ein wesentlicher Teil des Empfangslichts auf die wirksame Empfangsfläche des ersten Lichtempfängers fällt.

Das Verhältnis der Empfangssignale hängt hauptsächlich von der Tastweite ab, der Einfluss der Reflexionseigenschaften des detektierten Objekts ist vernachlässigbar. Daher können aus dem Verhältnis der Empfangssignale Informationen über die Tastweite bzw. Abweichungen von der Nenntastweite gewonnen werden. Diese Informationen können dazu genutzt werden, Änderungen der Tastweite bei der Auswertung der Erfassungssignale zu berücksichtigen.

Gemäß einer vorteilhaften Ausführungsform der Erfindung ist die Auswerteeinheit dazu ausgelegt, auf der Grundlage des von dem zweiten Lichtempfänger erzeugten Empfangssignals einen tastweitenabhängigen Korrekturfaktor zu ermitteln, und aus dem von dem ersten Lichtempfänger erzeugten Empfangssignal unter Anwendung des Korrekturfaktors ein korrigiertes Empfangssignal zu erzeugen. Das von dem ersten Lichtempfänger erzeugte Empfangssignal kann insbesondere derart korrigiert werden, dass es einen möglichst linearen, vorzugsweise möglichst konstanten, Verlauf über die Tastweite aufweist. Der Korrekturfaktor kann mittels einer algebraischen Gleichung, die aus dem Verlauf des von dem zweiten Lichtempfänger erzeugten Empfangssignals über die Tastweite gewonnen werden kann, oder mittels einer Look-Up-Tabelle ermittelt werden. Sowohl die Gleichung als auch die Look-Up-Tabelle können aus den optischen und geometrischen Parametern des Lichttasters berechnet werden, oder mit Hilfe eines Einlernvorgangs bestimmt werden.

Nach einer weiteren vorteilhaften Ausführungsform ist die Größe der wirksamen Empfangsfläche zumindest eines Lichtempfängers durch dessen lichtsensitive Fläche bestimmt.

Alternativ oder zusätzlich kann in dem Strahlengang vor zumindest einem Lichtempfänger eine jeweilige Blende derart angeordnet sein, dass die Größe der Empfangsfläche auf dem zumindest einen Lichtempfänger durch den Querschnitt der Blende und/oder durch den Abstand der Blende von dem zumindest einen Lichtempfänger bestimmt ist. Demnach kann bei beiden Lichtempfängern die Größe der wirksamen Empfangsfläche entweder mittels der lichtsensitiven Fläche der Lichtempfänger oder mittels zugeordneter Blende bestimmt sein. Alternativ kann die Größe der wirksamen Empfangsfläche des einen Lichtempfängers durch dessen lichtsensitive Fläche und die Größe der wirksamen Empfangsfläche des anderen Lichtempfängers durch eine Blende bestimmt sein. Weiterhin ist es möglich, bei einem oder beiden Lichtempfängern die wirksame Empfangsfläche sowohl durch die lichtsensitive Fläche als auch durch die vorgeordnete Blende zu definieren, wobei das Kriterium, ob die lichtsensitive Fläche oder die Blende bestimmend ist, von der Tastweite und damit von dem Auftreffwinkel des Empfangslichts abhängen kann.

Vorteilhafterweise kann bei der Verwendung einer Blende deren Querschnitt verstellbar sein. Hierdurch ist insbesondere eine vereinfachte Anpassung der Nenntastweite des Lichttasters möglich. Grundsätzlich können jedoch auch Blenden mit festem Querschnitt verwendet werden.

Gemäß einer weiteren vorteilhaften Ausgestaltung ist in dem Strahlengang zwischen der Detektionszone und den Lichtempfängern eine gemeinsame Empfangsoptik angeordnet, welche zumindest eine Empfangslinse, insbesondere eine Sammellinse, umfasst. Hierdurch vereinfacht sich der Fertigungs- und Justageaufwand, da nicht für jeden Lichtempfänger eine separate Empfangsoptik verbaut und justiert werden muss.

Vorteilhafterweise umfasst die Empfangsoptik eine Sammellinsenanordnung mit variabler Brennweite. Dadurch ist eine einfache Anpassung der Nenntastweite des Lichttasters an den jeweiligen Einsatzzweck möglich, ohne dass es aufwändiger Einrichtungs- und Justierarbeiten bedarf. Die Verwendung einer Sammellinsenanordnung mit variabler Brennweite als Empfangsoptik hat sich insbesondere im Zusammenhang mit der Verwendung von variablen Blenden zur Begrenzung der wirksamen Empfangsfläche bewährt. Weiterhin kann auch die Empfangsoptik eine variable Blende umfassen.

Erfindungsgemäß ist im Strahlengang vor den Lichtempfängern ein Strahlteiler angeordnet, welcher einen Teil des Empfangslichts zu dem ersten Lichtempfänger und einen anderen Teil des Empfangslichts zu dem zweiten Lichtempfänger lenkt. Mit einem solchen Strahlteiler, insbesondere Teilerspiegel, der vorzugsweise zwischen der Empfangsoptik und den Lichtempfängern angeordnet ist, lässt sich auf einfache Weise eine Aufteilung des Empfangslichts auf die beiden Lichtempfänger erzielen.

Der Strahlteiler kann derart ausgebildet sein, dass der Teil des zu dem zweiten Lichtempfänger gelenkten Empfangslichts kleiner ist als der Teil des zu dem ersten Lichtempfänger gelenkten Empfangslichts. Das Teilungsverhältnis des Strahlteilers kann beispielsweise 80:20 betragen. Da bei dem erfindungsgemäßen Lichttaster in der Regel die eigentlichen Informationen über das zu detektierende Objekt aus den Empfangssignalen des ersten Lichtempfängers gewonnen werden, während die Empfangssignale des zweiten Lichtempfängers lediglich der Gewinnung von Informationen über die Tastweite bzw. zur Linearisierung der Empfangssignale des ersten Lichtempfängers über die Tastweite dienen, ergibt sich gegenüber einem Strahlteiler, der die beiden Teile des Empfangslichts im Verhältnis 50:50 aufteilt, ein besseres Signal/Rausch-Verhältnis.

Insbesondere im Zusammenhang mit der Verwendung des vorstehend erläuterten Strahlteilers mit asymmetrischem Teilungsverhältnis hat es sich als vorteilhaft erwiesen, wenn die von dem ersten Lichtempfänger erzeugten Empfangssignale über eine erste Zeitperiode und die von dem zweiten Lichtempfänger erzeugten Empfangssignale über eine zweite Zeitperiode aufsummiert werden, wobei die zweite Zeitperiode bevorzugt länger ist als die erste Zeitperiode. Das Aufsummieren kann hierbei sowohl in den Lichtempfängern, beispielsweise durch Steuerung der Belichtungszeit, als auch nachträglich in der Auswerteeinheit erfolgen. Somit können also Intensitätsunterschiede bei der Verwendung von asymmetrischen Strahlteilern kompensiert werden. Dem liegt der Gedanke zugrunde, dass eine Veränderung des Korrekturfaktors für die Tastweite wahlweise auch in größeren Zeitabständen erfolgen kann als die Auswertung eines jeweiligen vom ersten Lichtempfänger erzeugten Empfangssignals.

Ein weiterer Strahlteiler kann zur Einkopplung des Sendelichtstrahls in den Strahlengang vorgesehen sein, beispielsweise zwischen zwei Sammellinsen der Empfangsoptik. Ein solcher Lichttaster arbeitet demnach nach dem Autokollimationsprinzip. Grundsätzlich kann die vorliegende Erfindung aber auch bei einem Lichttaster mit biaxialer Anordnung von Sende- und Empfangslichtstrahlengang zur Anwendung gelangen.

Nach einer weiteren vorteilhaften Ausführungsform der Erfindung ist die Auswerteeinheit dazu ausgelegt, auf der Grundlage des Verhältnisses zwischen dem von dem ersten Lichtempfänger erzeugten Empfangssignal und dem von dem zweiten Lichtempfänger erzeugten Empfangssignal die Tastweite des detektierten Objekts zu ermitteln. Unter dem Ermitteln der Tastweite wird das Ermitteln der absoluten Tastweite und/oder das Ermitteln einer Abweichung von einer Nenntastweite des Lichttasters verstanden. Somit ist zumindest in bestimmten Grenzen eine Abstandsmessung möglich.

Vorteilhafterweise ist die Auswerteeinheit dazu ausgelegt, auf der Grundlage von zeitlichen Veränderungen des Verhältnisses zwischen dem von dem ersten Lichtempfänger erzeugten Empfangssignal und dem von dem zweiten Lichtempfänger erzeugten Empfangssignal eine längs zur Ausbreitungsrichtung des Empfangslichts erfolgende Bewegung eines Objekts, insbesondere eines quer zur Ausbreitungsrichtung des Empfangslichts durch die Detektionszone transportierten Objekts, zu detektieren. Auf diese Weise kann z.B. ein unerwünschtes Flattern von Materialbahnen, beispielsweise Folienbahnen oder Papierbahnen, erkannt werden.

Weitere vorteilhafte Ausführungsformen der Erfindung ergeben sich aus den Ansprüchen, der Beschreibung und den Zeichnungen.

Die Erfindung wird nachfolgend anhand eines Ausführungsbeispiels mit Bezug auf die Zeichnungen beschrieben. Es zeigen:

Fig. 1 eine schematische Darstellung eines erfindungsgemäßen Lichttasters gemäß einem Ausführungsbeispiel;

Fig. 2 beispielhafte relative Empfangssignalverläufe eines erfindungsgemäßen Lichttasters über die Tastweite;

Fig. 3 das Verhältnis der Signalverläufe von Fig. 2; und

Fig. 4 den Empfangssignalverlauf des ersten Lichtempfängers über die Tastweite, in unkorrigierter und korrigierter Form.

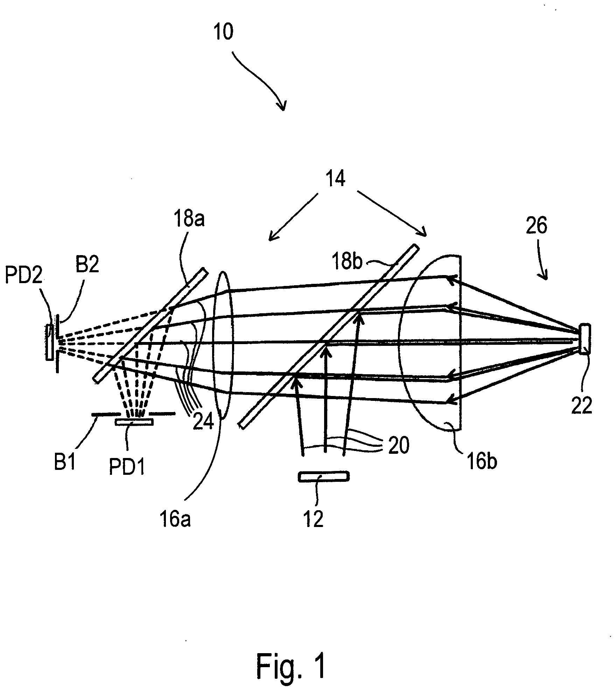

Gemäß Fig. 1 umfasst ein erfindungsgemäßer Lichttaster 10 eine Empfangsoptik 14, welche eine erste Sammellinse 16a und eine zweite Sammellinse 16b aufweist, einen ersten Strahlteiler 18a, einen zweiten Strahlteiler 18b sowie einen ersten Lichtempfänger PD1 und einen zweiten Lichtempfänger PD2. Den Lichtempfängern PD1, PD2 ist jeweils eine Blende B1 bzw. B2 zugeordnet. Die Lichtempfänger PD1, PD2 sind mit einer Auswerteeinheit (nicht dargestellt) verbunden.

Die lichtempfindlichen Flächen der Lichtempfänger PD1, PD2 stehen in einem rechten Winkel zueinander. Der erste Strahlteiler 18a ist zwischen den Lichtempfängern PD1, PD2 und der ersten Sammellinse 16a angeordnet, während sich der zweite Strahlteiler 18b zwischen der ersten Sammellinse 16a und der zweiten Sammellinse 16b befindet. Die Strahlteiler 18b, 18b können beispielsweise als Teilerspiegel oder Teilerprismen ausgebildet sein.

Der Lichtsender 12 kann ein oder mehrere Lichtquellen, beispielsweise Laser oder Leuchtdioden, umfassen und sendet monochromes oder polychromes Sendelicht 20 in Richtung auf den zweiten Strahlteiler 18b, welcher das Sendelicht 20 durch die als Objektivlinse dienende Sammellinse 16b in Richtung einer Detektionszone 26 lenkt.

Ein Objekt 22, welches sich in der Detektionszone 26 befindet, reflektiert auftreffendes Sendelicht 20 diffus oder spiegelnd als Empfangslicht 24 zurück in Richtung des Lichttasters 10.

Das Empfangslicht 24 tritt durch die zweite Sammellinse 16b, den zweiten Strahlteiler 18b und die erste Sammellinse 16a hindurch und trifft auf den ersten Strahlteiler 18a, welcher einen Teil des Empfangslichts 24 in Richtung des ersten Lichtempfängers PD1 und einen anderen Teil in Richtung des zweiten Lichtempfängers PD2 lenkt. Das auf die Lichtempfänger PD1, PD2 auftreffende Empfangslicht 24 wird durch die Blenden B1, B2 beschnitten, wobei die Blenden B1, B2 im vorliegenden Fall die wirksame Empfangsfläche der Lichtempfänger PD1, PD2 definieren.

Wie bereits vorstehend erläutert wurde, wird das Empfangslicht 24 durch die Empfangsoptik 14 als jeweilige Lichtflecke auf die Lichtempfänger PD1, PD2 abgebildet, wobei in der Regel die Lichtflecke ihren kleinsten Durchmesser haben, wenn sich das Objekt 22 bei der Nenntastweite befindet. Wenn sich das Objekt 22 näher oder weiter vom Lichttaster 10 entfernt befindet, vergrößert sich der Durchmesser der Lichtflecke, während sich die Bestrahlungsstärke, d.h. die Leistung je Fläche, die auf die Lichtempfänger PD1, PD2 bzw. auf die Blenden B1, B2 trifft, verringert. Aufgrund der Aufweitung trifft ein Teil des einen, auf den Lichtempfänger PD2 auftreffenden Lichtflecks nunmehr auf die Blende B2, was zusammen mit der Abnahme der Bestrahlungsstärke letztlich zu einer Abnahme der auf den Lichtempfänger PD2 treffenden Lichtmenge führt. Da jedoch der Querschnitt der Blende B1 größer als der Querschnitt der Blende B2 ist, trifft auch nach einer Aufweitung der andere, von dem Lichtempfänger PD1 erfasste Lichtfleck vollständig oder zumindest zu einem Großteil auf den Lichtempfänger PD1. Die Blende B1 dient im Wesentlichen der Ausblendung von Störlicht.

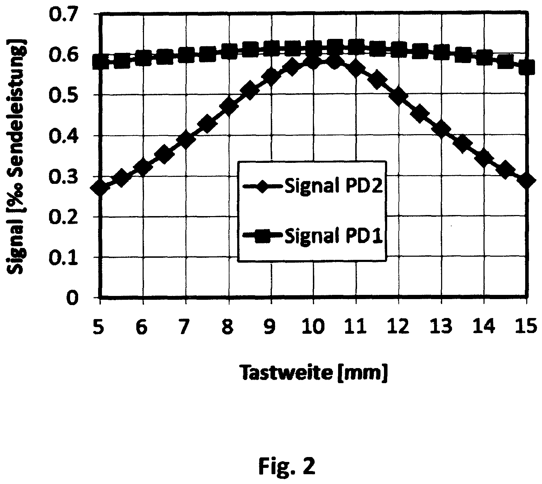

Die in Fig. 2 bis 4 wiedergegebenen Signalverläufe basieren auf einer Simulation, für die die folgenden Parameter zugrunde gelegt wurden.

|  | PD1 / B1 | PD2 / B2 |
|---|---|---|
| **Lichtempfindliche Fläche** | 6 mm x 6 mm | 2 mm x 4 mm |
| **Blendenquerschnitt** | 6 mm x 6 mm | 0,9 mm x 3,4 mm |
| **Abstand erster Teilerspiegel - Blende** | 8 mm | 7,7 mm |
| **Abstand Blende - Lichtempfänger** | 3,0 mm | 0,5 mm |

Die Angaben für die Abstände beziehen sich jeweils auf die in den Spaltenüberschriften angegebene Paare von Lichtempfängern und Blenden.

In Fig. 2 sind die Verläufe der Empfangssignale der Lichtempfänger PD1, PD2 wiedergegeben, wobei die Höhe der Empfangssignale in ‰ der Sendeleistung des Lichtsenders 12 angegeben ist. Die Empfangssignale beziehen sich auf ein mattes Objekt 22, welches gemäß dem Lambert-Gesetz streut und eine Streueffizienz von 100 % aufweist.

Beide Kurven weisen bei der Nenntastweite von ca. 10 mm ihr Maximum auf. Bei größeren oder kleineren Tastweiten fallen beide Kurven ab, wobei der Abfall bei den Empfangssignalen des zweiten Lichtempfängers PD2 aufgrund der kleineren wirksamen Empfangsfläche wesentlich größer ist als bei den Empfangssignalen des ersten Lichtempfängers PD1.

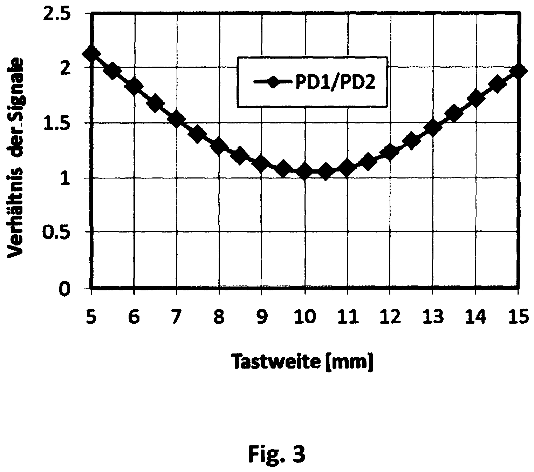

Der Signalverlauf der Kurve von Fig. 3 gibt das Verhältnis zwischen den Empfangssignalen des ersten Lichtempfängers PD1 und den Empfangssignalen des zweiten Lichtempfängers PD2, d.h. den Quotienten der Kurven von Fig. 2, wieder.

Aus dem Verlauf der Kurve von Fig. 3 lässt sich beispielsweise durch Extrapolation ein Korrekturfaktor ableiten, mit dem sich aus dem unkorrigierten Empfangssignal $S_{PD1}$ ein korrigiertes Empfangssignal $S_{PD1,korr.}$ bestimmen lässt:

$$S_{PD1,korr.} = S_{PD1} \cdot [S_{PD1} /( S_{PD2} \cdot 1{,}0593)]^{0{,}08},$$

wobei $S_{PD2}$ das Empfangssignal des zweiten Lichtdetektors PD2 ist.

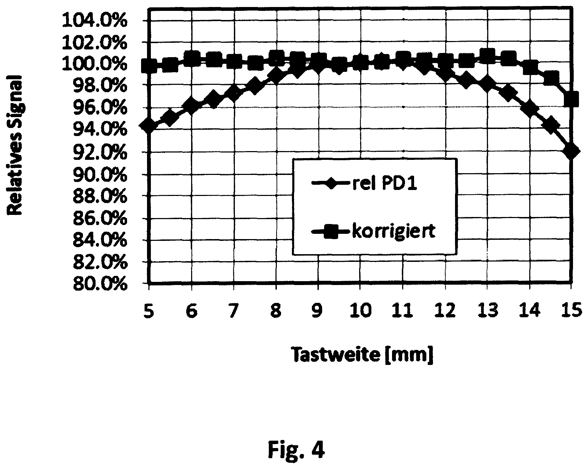

In Fig. 4 repräsentiert die obere Kurve das korrigierte Empfangssignal $S_{PD1,korr.}$ und die untere Kurve das ursprüngliche, unkorrigierte Empfangssignal $S_{PD1}$.

Wie am Verlauf der Kurven zu erkennen ist, weist das korrigierte Empfangssignal $S_{PD1,korr.}$ gegenüber dem ursprünglichen, unkorrigierten Empfangssignal $S_{PD1}$ eine deutlich verringerte Abweichung von der Signalhöhe in Nenntastweite auf. Die bei größeren Tastweiten am rechten Rand der Kurven festzustellende größere Abweichung der Signalhöhe ist auf eine gewisse Asymmetrie der Signalverlaufskurven bezüglich der Nenntastweite zurückzuführen. Innerhalb eines Tastweitenbereichs von 5 mm bis 13 mm beträgt die Abweichung von einem idealen konstanten Signalverlauf maximal ± 1 %.

Im Vergleich dazu ist bei einem herkömmlichen Lichttaster, bei dem keine tastweitenabhängige Signalkorrektur erfolgt, selbst unter Ausnutzung aller Optimierungsmöglichkeiten bezüglich des optischen Designs eine Reduzierung der Signalschwankungen auf unter 10 % in einem Tastweitenbereich von ± 30 % der Nenntastweite nicht möglich.

Mit Hilfe des erfindungsgemäßen Lichttasters ist es somit möglich, die Detektionszuverlässigkeit bei Abweichungen der Tastweite von der Nenntastweite zu erhöhen bzw. den nutzbaren Tastweitenbereich ohne Einbußen bei der Detektionszuverlässigkeit deutlich zu vergrößern.

**Bezugszeichenliste**

| 10 | Lichttaster |
|---|---|
| 12 | Lichtsender |
| 14 | Empfangsoptik |
| 16a, 16b | Sammellinse |
| 18a, 18b | Strahlteiler |
| 20 | Sendelicht |
| 22 | Objekt |
| 24 | Empfangslicht |
| 26 | Detektionszone |

PD1, PD2    Lichtempfänger
B1,B2       Blende

**Patentansprüche**

1.  Lichttaster (10) mit
    einem Lichtsender (12) zum Aussenden von Sendelicht (20) in eine Detektionszone (26),
    einem ersten und einem zweiten Lichtempfänger (PD1, PD2), welche zum Empfangen von Empfangslicht (24) aus der Detektionszone (26), das von einem zu detektierenden Objekt (22) spiegelnd oder diffus reflektiert wird, und zum Erzeugen von Empfangssignalen aus dem Empfangslicht (24) ausgelegt sind, und
    einer Auswerteeinheit zum Erzeugen eines Erfassungssignals aus den Empfangssignalen,
    wobei die Lichtempfänger (PD1, PD2) derart angeordnet sind, dass jeder Lichtempfänger (PD1, PD2) einen Teil des Empfangslichts (24) empfängt, und
    wobei jeder Lichtempfänger (PD1, PD2) eine wirksame Empfangsfläche aufweist, wobei die wirksame Empfangsfläche des zweiten Lichtempfängers (PD2) kleiner ist als die wirksame Empfangsfläche des ersten Lichtempfängers (PD1), so dass das Verhältnis zwischen dem von dem ersten Lichtempfänger (PD1) erzeugten Empfangssignal und dem von dem zweiten Lichtempfänger (PD2) erzeugten Empfangssignal von der Tastweite des detektierten Objekts (22) abhängt.
    **dadurch gekennzeichnet,**
    **dass** im Strahlengang vor den Lichtempfängern (PD1, PD2) ein Strahlteiler (18a) angeordnet ist, welcher einen Teil des Empfangslichts (24) zu dem ersten Lichtempfänger (PD1) und einen anderen Teil des Empfangslichts (24) zu dem zweiten Lichtempfänger (PD2) lenkt.

2.  Lichttaster nach Anspruch 1,
    **dadurch gekennzeichnet,**
    **dass** die Auswerteeinheit dazu ausgelegt ist, auf der Grundlage des von dem zweiten Lichtempfänger (PD2) erzeugten Empfangssignals einen tastweitenabhängigen Korrekturfaktor zu ermitteln und aus dem von dem ersten Lichtempfänger (PD1) erzeugten Empfangssignal unter Anwendung des Korrekturfaktors ein korrigiertes Empfangssignal zu erzeugen.

3.  Lichttaster nach Anspruch 1 oder 2,
    **dadurch gekennzeichnet,**
    **dass** die Größe der wirksamen Empfangsfläche zumindest eines Lichtempfängers (PD1, PD2) durch dessen lichtsensitive Fläche bestimmt ist.

4.  Lichttaster nach einem der vorhergehenden Ansprüche,
    **dadurch gekennzeichnet,**
    **dass** in dem Strahlengang vor zumindest einem Lichtempfänger (PD1, PD2) eine jeweilige Blende (B1, B2) derart angeordnet ist, dass die Größe der wirksamen Empfangsfläche auf dem zumindest einen Lichtempfänger (PD1, PD2) durch den Querschnitt der Blende und/oder durch den Abstand der Blende (B1, B2) von dem zumindest einen Lichtempfänger (PD1, PD2) bestimmt ist.

5.  Lichttaster nach Anspruch 4,
    **dadurch gekennzeichnet,**
    **dass** der Querschnitt der Blende (B1, B2) verstellbar ist.

6.  Lichttaster nach einem der vorhergehenden Ansprüche,
    **dadurch gekennzeichnet**
    **dass** in dem Strahlengang zwischen der Detektionszone (26) und den Lichtempfängern (PD1, PD2) eine gemeinsame Empfangsoptik (14) angeordnet ist, welche zumindest eine Empfangslinse (16a, 16b) umfasst.

7.  Lichttaster nach Anspruch 6,
    **dadurch gekennzeichnet,**
    **dass** die Empfangsoptik (14) eine Sammellinsenanordnung mit variabler Brennweite umfasst.

8.  Lichttaster nach einem der vorhergehenden Ansprüche,
    **dadurch gekennzeichnet,**

**dass** der Strahlteiler (18a) derart ausgebildet ist, dass der Teil des zu dem zweiten Lichtempfänger (PD2) gelenkten Empfangslichts (24) kleiner ist als der Teil des zu dem ersten Lichtempfänger (PD1) gelenkten Empfangslichts (24).

9. Lichttaster nach einem der vorhergehenden Ansprüche,
   **dadurch gekennzeichnet,**
   **dass** die von dem ersten Lichtempfänger (PD1) erzeugten Empfangssignale über eine erste Zeitperiode und die von dem zweiten Lichtempfänger (PD2) erzeugten Empfangssignale über eine zweite Zeitperiode aufsummiert werden, wobei bevorzugt die zweite Zeitperiode länger ist als die erste Zeitperiode.

10. Lichttaster nach einem der vorhergehenden Ansprüche,
    **dadurch gekennzeichnet,**
    **dass** die Auswerteeinheit dazu ausgelegt ist, auf der Grundlage des Verhältnisses zwischen dem von dem ersten Lichtempfänger (PD1) erzeugten Empfangssignal und dem von dem zweiten Lichtempfänger (PD2) erzeugten Empfangssignal die Tastweite des detektierten Objekts (22) zu ermitteln.

11. Lichttaster nach einem der vorhergehenden Ansprüche,
    **dadurch gekennzeichnet,**
    **dass** die Auswerteeinheit dazu ausgelegt ist, auf der Grundlage von zeitlichen Veränderungen des Verhältnisses zwischen dem von dem ersten Lichtempfänger (PD1) erzeugten Empfangssignal und dem von dem zweiten Lichtempfänger (PD2) erzeugten Empfangssignal eine längs zur Ausbreitungsrichtung des Empfangslichts erfolgende Bewegung eines Objekts (22), insbesondere eines quer zur Ausbreitungsrichtung des Empfangslichts (24) durch die Detektionszone (26) transportierten Objekts (22), zu detektieren.

## Claims

1. An optical sensor (10) comprising
   a light transmitter (12) for transmitting transmitted light (20) into a detection zone (26);
   a first and a second light receiver (PD1, PD2) which are configured for receiving received light (24) from the detection zone (26) which is reflected in a reflective or diffuse manner by an object (22) to be detected and for generating received signals from the received light (24); and
   an evaluation unit for generating a detection signal from the received signals,
   wherein the light receivers (PD1, PD2) are arranged such that each light receiver (PD1, PD2) receives a portion of the received light (24); and wherein each light receiver (PD1, PD2) has an effective reception surface, with the effective reception surface of the second light receiver (PD2) being smaller than the effective reception surface of the first light receiver (PD1) such that the ratio between the received signal generated by the first light receiver (PD1) and the received signal generated by the second light receiver (PD2) depends on the sensing distance of the detected object (22), **characterized in that**
   a beam splitter (18a) is arranged in the optical path upstream of the light receivers (PD1, PD2) and deflects a portion of the received light (24) to the first light receiver (PD1) and another portion of the received light (24) to the second light receiver (PD2).

2. An optical sensor in accordance with claim 1,
   **characterized in that**
   the evaluation unit is configured to determine a correction factor dependent on the sensing distance on the basis of the received signal generated by the second light receiver (PD2) and to generate a corrected received signal from the received signal generated by the first light receiver (PD1) while using the correction factor.

3. An optical sensor in accordance with claim 1 or claim 2,
   **characterized in that**
   the size of the effective reception surface of at least one light receiver (PD1, PD2) is determined by its light-sensitive surface.

4. An optical sensor in accordance with any one of the preceding claims,
   **characterized in that**
   a respective diaphragm (B1, B2) is arranged in the optical path upstream of at least one light receiver (PD1, PD2) such that the size of the effective reception surface on the at least one light receiver (PD1, PD2) is determined by the cross-section of the diaphragm and/or by the spacing of the diaphragm (B1, B2) from the at least one light receiver (PD1, PD2).

**5.** An optical sensor in accordance with claim 4,
**characterized in that**
the cross-section of the diaphragm (B1, B2) is adjustable.

**6.** An optical sensor in accordance with any one of the preceding claims,
**characterized in that**
a common reception optics (14) which comprises at least one reception lens (16a, 16b) is arranged in the optical path between the detection zone (26) and the light receivers (PD1, PD2).

**7.** An optical sensor in accordance with claim 6,
**characterized in that**
the reception optics (14) comprises a converging lens arrangement having a variable focal length.

**8.** An optical sensor in accordance with any one of the preceding claims,

**characterized in that**
the beam splitter (18a) is configured such that the portion of the received light (24) deflected to the second light receiver (PD2) is smaller than the portion of the received light (24) deflected to the first light receiver (PD1).

**9.** An optical sensor in accordance with any one of the preceding claims,
**characterized in that**
the received signals generated by the first light receiver (PD1) over a first time period and the received signals generated by the second light receiver (PD2) over a second time period are summed, with the second time period preferably being longer than the first time period.

**10.** An optical sensor in accordance with any one of the preceding claims,
**characterized in that**
the evaluation unit is configured to determine the sensing distance of the detected object (22) on the basis of the ratio between the received signal generated by the first light receiver (PD1) and the received signal generated by the second light receiver (PD2).

**11.** An optical sensor in accordance with any one of the preceding claims,
**characterized in that**
the evaluation unit is configured to detect a movement of an object (22), in particular of an object (22) transported through the detection zone (26) transversely to the direction of propagation of the received light (24), taking place lengthways with respect to the direction of propagation of the received light on the basis of time changes of the ratio between the received signal generated by the first light receiver (PD1) and the received signal generated by the second light receiver (PD2).


**Revendications**

**1.** Détecteur optique (10), comportant
un émetteur de lumière (12) pour émettre une lumière d'émission (20) dans une zone de détection (26),
un premier et un second récepteur de lumière (PD1, PD2) qui sont conçus pour recevoir la lumière de réception (24) provenant de la zone de détection (26) qui est réfléchie spéculairement ou de façon diffuse par un objet (22) à détecter, et pour générer des signaux de réception à partir de la lumière de réception (24), et
une unité d'évaluation pour générer un signal de détection à partir des signaux de réception,
dans lequel
les récepteurs de lumière (PD1, PD2) sont agencés de telle sorte que chaque récepteur de lumière (PD1, PD2) reçoit une partie de la lumière de réception (24),
et chaque récepteur de lumière (PD1, PD2) présente une surface de réception efficace, la surface de réception efficace du second récepteur de lumière (PD2) étant plus petite que la surface de réception efficace du premier récepteur de lumière (PD1), de telle sorte que le rapport entre le signal de réception généré par le premier récepteur de lumière (PD1) et le signal de réception généré par le second récepteur de lumière (PD2) dépend de la portée de détection de l'objet détecté (22),

**caractérisé en ce que**

un diviseur de faisceau (18a) est agencé en avant des récepteurs de lumière (PD1, PD2) dans le trajet optique, qui dirige une partie de la lumière de réception (24) vers le premier récepteur de lumière (PD1) et une autre partie de la lumière de réception (24) vers le second récepteur de lumière (PD2).

2. Détecteur optique selon la revendication 1,
   **caractérisé en ce que**
   l'unité d'évaluation est conçue pour déterminer un facteur de correction dépendant de la portée de détection en se basant sur le signal de réception généré par le second récepteur de lumière (PD2) et pour générer un signal de réception corrigé à partir du signal de réception généré par le premier récepteur de lumière (PD1), en appliquant le facteur de correction.

3. Détecteur optique selon la revendication 1 ou 2,
   **caractérisé en ce que**
   la taille de la surface de réception efficace d'au moins un récepteur de lumière (PD1, PD2) est définie par sa surface photosensible.

4. Détecteur optique selon l'une des revendications précédentes, **caractérisé en ce que**
   un diaphragme respectif (B1, B2) est agencé en avant d'au moins un récepteur de lumière (PD1, PD2) dans le trajet optique, de telle sorte que la taille de la surface de réception efficace sur ledit au moins un récepteur de lumière (PD1, PD2) est définie par la section transversale du diaphragme et/ou par la distance du diaphragme (B1, B2) par rapport audit au moins un récepteur de lumière (PD1, PD2).

5. Détecteur optique selon la revendication 4,
   **caractérisé en ce que**
   la section transversale du diaphragme (B1, B2) est variable.

6. Détecteur optique selon l'une des revendications précédentes,
   **caractérisé en ce que**
   une optique de réception commune (14) est agencée entre la zone de détection (26) et les récepteurs de lumière (PD1, PD2) dans le trajet optique, laquelle comprend au moins une lentille de réception (16a, 16b).

7. Détecteur optique selon la revendication 6,
   **caractérisé en ce que**
   l'optique de réception (14) comprend un ensemble de lentille convergente à focale variable.

8. Détecteur optique selon l'une des revendications précédentes,
   **caractérisé en ce que**
   le diviseur de faisceau (18a) est conçu de telle sorte que la partie de la lumière de réception (24) dirigée vers le second récepteur de lumière (PD2) est plus petite que la partie de la lumière de réception (24) dirigée vers le premier récepteur de lumière (PD1).

9. Détecteur optique selon l'une des revendications précédentes,
   **caractérisé en ce que**
   les signaux de réception générés par le premier récepteur de lumière (PD1) sont additionnés pendant une première période temporelle et les signaux de réception générés par le second récepteur de lumière (PD2) sont additionnés pendant une seconde période temporelle, et de préférence la seconde période temporelle est plus longue que la première période temporelle.

10. Détecteur optique selon l'une des revendications précédentes,
    **caractérisé en ce que**
    l'unité d'évaluation est conçue pour déterminer la porté de détection de l'objet détecté (22) en se basant sur le rapport entre le signal de réception généré par le premier récepteur de lumière (PD1) et le signal de réception généré par le second récepteur de lumière (PD2).

11. Détecteur optique selon l'une des revendications précédentes,
    **caractérisé en ce que**
    l'unité d'évaluation est conçue pour détecter un mouvement d'un objet (22) réalisé le long de la direction de propagation de la lumière de réception, en particulier d'un objet (22) transporté à travers la zone de détection (26) transversalement à la direction de propagation de la lumière de réception (24), en se basant sur des modifications temporelles du rapport entre le signal de réception généré par le premier récepteur de lumière (PD1) et le signal de réception généré par le second récepteur de lumière (PD2).

Fig. 1

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3203720 C2
- EP 2848960 A1
- EP 2629050 A1
- DE 19730341 A1
- DE 19945442 A1
- DE 19846002 A1